# EUROPÄISCHE PATENTSCHRIFT

(11) **EP 0 679 862 B1**
(45) Veröffentlichungstag und Bekanntmachung des Hinweises auf die Patenterteilung: **27.01.1999**
(21) Anmeldenummer: 95101876.1
(22) Anmeldetag: 11.02.1995
(51) Int. Cl.: G01B 5/06, G01B 7/312, G01B 7/28

(54) **Korrektur eines von einem Tastwalzenpaar zur Dicke eines textilen Faserbandes gewonnenen Messsignals**
Correction of the thickness measuring signals of a textile card sliver, gained by a pair of sensing drums
Correction des signaux de mesure d'épaisseur d'un ruban fibreux de textile, obtenus par une paire de rouleaux palpeurs

(30) Priorität: 29.04.1994 DE 4414972
(43) Veröffentlichungstag der Anmeldung: 02.11.1995
(73) Patentinhaber: Rieter Ingolstadt Spinnereimaschinenbau AG, 85055 Ingolstadt (DE)
(72) Erfinder: Denz, Peter, D-86558 Hohenwart (DE); Mandl, Roland, D-94496 Ortenburg (DE); Wisspeintner, Karl, D-94496 Ortenburg (DE)

(56) Entgegenhaltungen:
- WO-A-79/00420
- DE-A- 2 140 639
- DE-A- 2 551 153
- DE-A- 2 650 287
- DE-C- 842 849
- GB-A- 1 425 826
- US-A- 4 691 547
- US-A- 5 010 494

## Beschreibung

Die Erfindung betrifft ein Verfahren zur Korrektur eines von einem Tastwalzenpaar zur Dicke eines textilen Faserbandes gewonnenen Meßsignals, wobei eine der beiden Tastwalzen schwenkbar gelagert wird und die schwenkbare Tastwalze mittels eines Kraftmittels gegen die stationäre Tastwalze gepreßt wird und bei Unrundheit mindestens einer Tastwalze und/oder bei Abweichung aus einer zentrischen Lagerung der Tastwalze ein periodischer Fehlerwert im Meßsignal erzeugt wird und die von der Dicke des Faserbandes verursachte Schwenkbewegung der Tastwalze von einer elektrischen Signalbildung in ein elektrisches Meßsignal gewandelt wird und eine Signalverarbeitung auf das elektrische Meßsignal reagiert, um einen Verzug des Faserbandes oder eine Qualitätsüberwachung des Faserbandes zu beeinflussen.
Eine entsprechende Vorrichtung dient der Durchführung des Verfahrens nach einem oder mehreren der Ansprüche 1 bis 4.

Mit einem Tastwalzenpaar wird die Dicke eines Faservlieses oder eines Faserbandes gemessen. Nachfolgend wird aus Gründen der Einfachheit nur vom Faserband gesprochen, obwohl die zur Tastwalze getroffenen Aussagen auch für Dickenmessungen des Faservlies gelten. Aus der gemessenen Dicke wird ein entsprechendes Signal, das Meßsignal, gebildet. Das Meßsignal wird einer Signalverarbeitung zugeführt. Die Signalverarbeitung wirkt mit ihrem Ausgangssignal auf eine Vorrichtung zum Verzug des Faserbandes oder wird nachfolgend zu einer Qualitätsüberwachung genutzt. Die Signalverarbeitung kann beispielsweise somit eine Verzugsänderung genau in dem Augenblick realisieren, in dem sich eine abweichende Banddicke im Verzugspunkt befindet.

Das Tastwalzenpaar ist so gestaltet, daß zu einer stationär angeordneten, drehbaren Tastwalze die andere, drehbare Tastwalze schwenkbar angeordnet ist. Die beiden Tastwalzen sind mit einer Feder vorgespannt. Entsprechend der Dicke des Faserbandes, das zwischen einem Tastwalzenpaare geführt wird, wird die schwenkbare Tastwalze ausgelenkt. Der Winkel der Auslenkung wird in ein elektrisches Signal, das Meßsignal, umgewandelt. Ein solches Tastwalzenpaar ist bekannterweise vor einem Streckwerk eingesetzt. Ein Tastwalzenpaar hat vorteilhafterweise einen mechanisch einfachen Aufbau, ist robust und somit kostengünstig.

Bei Betrieb eines Tastwalzenpaares kann es vorkommen, daß das Meßsignal verfälscht wird.
Bei einem Tastwalzenpaar als mechanisch arbeitendem Sensor ist bekannt, daß aufgrund von Toleranzen bei den Tastwalzen sowie Toleranzen der Tastwalzenlagerung eine Beeinflussung des Meßsignals existiert. Abweichungen von der idealen Geometrie eines Tastwalzenkörpers können sich in Querschnittsänderungen über die Länge des zylindrischen Walzenkörpers zeigen. Ebenso führen Abweichungen von einer zentrischen Lagerung der Tastwalzen zu einer Exzentrizität. Die Toleranzen in der geometrischen Abmessung der Tastwalzen überlagern sich mit den Toleranzen aus der Lagerung der Tastwalzen. Diese Toleranzen führen zu einem nicht zu unterschätzenden Fehler im Meßsignal. Es handelt sich um einen periodischen Fehler, der mit jeder Umdrehung einer Tastwalze wirkt.

Die Abweichungen wurden bislang nach dem Stand der Technik akzeptiert und somit blieb der Einsatz der Tastwalze bei der Messung der Faserbanddicke auf Anwendungsfälle beschränkt, wo der Fehlereinfluß vertretbar erschien. Trotz Zuverlässigkeit und Robustheit im Praxiseinsatz konnte sich bisher die Tastwalze aus den genannten Gründen nicht für einen umfassenden Einsatz zur Messung des Faserbanddicke an Vorspinnereimaschinen durchsetzen.

Wird ein Tastwalzenpaar als Meßorgan lediglich eingesetzt, um Langzeitschwankungen des Faserbandes zu ermitteln, bleibt die Auswirkung dieses Fehlers verhältnismäßig gering. Der Fehler bleibt auch relativ gering, wenn die zu erfassende Faserbanddicke relativ groß ist. Das ist beispielsweise bei einem doublierten Faserband der Fall, bevor es im Streckwerk verzogen wird.

Beim Einsatz einer Tastwalze zur Ermittlung von Meßsignalen, um Kurzzeitschwankungen eines relativ dünnen Faserbandes zu regulieren, hat der beschriebene Fehler jedoch gravierende Auswirkungen. Das wäre der Fall beim Einsatz der Tastwalze zur Messung am Ausgang einer Vorspinnereimaschine. Eine mögliche Einsatzvariante der Nutzung von am Ausgang eines Prozesses gewonnenen Meßsignals auf eine Regulierung von Vorspinnereimaschinen beschreibt EP 176 661.

Eine Lösung zur Vermeidung von Fehlern aus Unrundheit und/oder Exzentrizität im Meßsignal wird nicht angegeben.

Kurzzeitschwankungen der Faserbanddicke liegen in einem Faserbandbereich der kleiner ist als der Umfang einer Tastwalze. Damit wird deutlich, daß periodisch wirkende Fehler durch Unrundheit und/oder Exzentrizität der Tastwalze eine enorme Auswirkung auf das Meßsignal haben können.

Dieser Fehlereinfluß wird umso größer, je kleiner die Dicke des zu messenden Faserbandes ist. Damit wird erkennbar, daß Maßtoleranzen und/oder Exzentrizität ab einem bestimmten Verhältnis des mittleren Abstandes beider Tastwalzen relevant werden.

Nach dem gegenwärtigen Stand der Technik kann dieser Fehler nur dadurch reduziert werden, daß die Tastwalzen einem kostenintensiven Fertigungs- und Prüfverfahren unterworfen sind. Den bekannten Fehler weiter geringfügig zu reduzieren, würde zu überproportionalen Aufwendungen führen. Aus diesem Grunde sind Tastwalzen zur Messung von Kurzzeitschwankungen der Faserbanddicke nicht am Ausgang von Vorspinnereimaschinen eingesetzt.

Die Erfindung hat die Aufgabe, den durch Unrundheit und/oder Exzentrizität eines Tastwalzenpaares verursachten Fehler im Meßsignal, das an einem Tastwalzenpaar einer Vorspinnereimaschine zur Messung der Dicke von Faservlies oder Faserband gewonnen wird, zu erfassen und zu korrigieren.

Die technische Aufgabe der Erfindung wird gelöst durch die Merkmale des Anspruches 1.

Nach der verfahrensgemäßen Korrektur wird der Meßfehler elektronisch kompensiert.
Die Tastwalze ist mit einem digitalen Drehwinkelgeber gekoppelt, der für definierte Winkelstellungen einer Umdrehung die Aufnahme von Meßsignalen festlegt. Die Tastwalze dreht mit einer bekannten Geschwindigkeit. Während einer Umdrehung der Tastwalze treten keine oder nur geringe Geschwindigkeitsänderungen auf. Das vom Tastwalzenpaar erzeugte Dickensignal wird von einer elektrischen Signalbildung in ein elektrisches Meßsignal umgewandelt und anschließend digitalisiert. Somit wird eine definierte Anzahl von Meßsignalen für jeweils eine Umdrehung erzeugt, d.h. die Abtastrate für ein Intervall ist konstant. Dabei wird als Intervall eine Umdrehung der Tastwalzen zugrunde gelegt. Mehrere Intervalle bilden einen Zyklus. Die Abtastung erfolgt dabei synchron zu vorgewählten und gleiche Abstände aufweisende Winkelstellungen der Tastwalzen. Für zahlreiche Zyklen von Umdrehungen wird ein Mittelwert eines Intervalls ermittelt. Es wird vorausgesetzt, daß die Meßsignale zur Faserbanddicke bezüglich ihres Mittelwertes einer statistischen Normalverteilung entsprechen, d.h. die Meßsignale zur Faserbanddicke sind um ihren Mittelwert symmetrisch verteilt. Sie sind damit statistisch unabhängig von Unrundheit und/oder Exzentrizität des Tastwalzenpaares. Die über viele Zyklen gemittelten Meßsignale eines Intervalls geben ein Abbild des Fehlerwertes. Dabei ist davon auszugehen, daß nur die zur Umdrehung synchronen Meßsignalanteile bei einer Mittelung nicht den Wert Null annehmen.

Die aus dem gemittelten Wertesatz der Meßsignale ermittelbaren Fehlerwerte werden positionsbezogen, d.h. zeit- oder drehwinkelbezogen gespeichert. Es wird ein sogenanntes "Urbild" des Tastwalzenpaares für ein Intervall erzeugt. Nachfolgend werden mit Inbetriebnahme der Tastwalzen von den aktuellen, positionsbezogenen Meßsignalen die positionssynchronen Fehlerwerte aus dem Speicher abgerufen. Entsprechend dem Charakter der Unrundheit (Erhöhung oder Senke auf der Tastwalze) muß zum aktuellen Meßsignal der positionssynchrone Fehlerwert addiert oder subtrahiert werden. Das Meßsignal ist somit um den Fehler der Unrundheit und/oder Exzentrizität korrigiert. Zur weiteren Nutzung wird das korrigierte Meßsignal einer Signalverarbeitung zur Verfügung gestellt. Diese Signalverarbeitung kann das korrigierte Meßsignal für eine Überwachung der Faserbanddicke aufbereiten, d.h. für eine Qualitätsdatenerfassung aufbereiten oder aber die Signalverarbeitung kann das korrigierte Meßsignal auch für eine Beeinflussung des Verzuges aufbereiten.

Die Genauigkeit der Korrektur des Meßsignals hängt von der Art der Positionsbestimmung und der Anzahl der gemittelten Intervalle von Meßsignalen ab.

Diese Korrektur des Meßfehlers noch vor Weiterbearbeitung des Meßsignals in anderen Signalverarbeitungen, eröffnet den Einsatz der mechanischen Tastwalzen als Meßorgan zur Bestimmung der Faserbanddicke am Ausgang einer Vorspinnereimaschine, also zur kurzwelligen Dickenmessung eines verzogenen Faserbandes.

Die Erfindung mit ihren Merkmalen wird nachfolgend an einem Ausführungsbeispiel erläutert. Dabei zeigen
- Figur 1: Aufbau eines Tastwalzenpaares,
- Figur 2: ideales Tastwalzenpaar,
- Figur 2a: Tastwalzenpaar mit Unrundheit,
- Figur 2b: Tastwalzenpaar mit Exzentrizität
- Figur 3: Anordnung zur Korrektur der Unrundheit und/oder Exzentrizität,
- Figur 4: Tastwalzenpaar mit Unrundheit einer Senke im Drehwinkelbereich π bis 2π,
- Figur 5: graphische Darstellung des Prinzips der Korrektur des Meßfehlers.

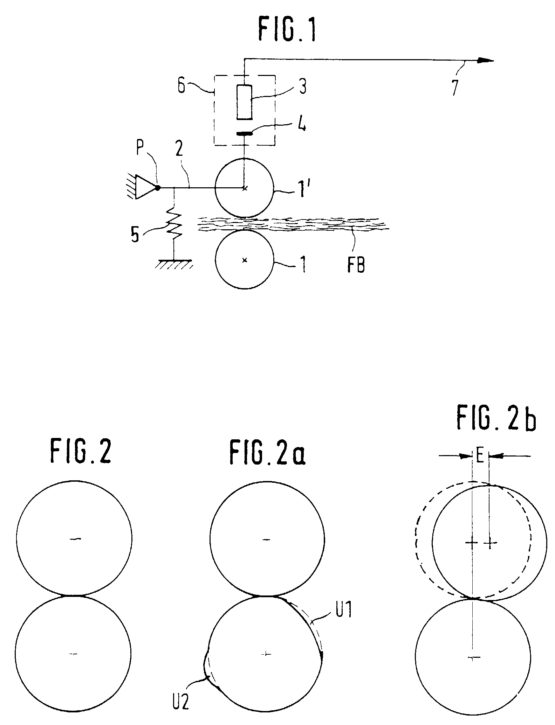

Figur 1 zeigt ein Tastwalzenpaar 1, 1' bei der Dickenmessung eines Faserbandes FB. Ein solcher Einsatz ist denkbar an einer Strecke. Der Einsatz des Tastwalzenpaares ist darüberhinaus auch möglich zur Dickenmessung des Faservlieses bei einer Karde. Zur Erläuterung der grundsätzlichen Funktion der Erfindung erfolgt die nachfolgende Beschreibung für die Banddickenmessung an einer Strecke.
Die Tastwalze 1 ist in ihrer Position fixiert, aber drehbar gelagert. Die Tastwalze 1' ist drehbar an einem Schwenkarm 2 gelagert. Der Schwenkarm 2 ist schwenkbar um den Schwenkpunkt P. Die beiden Tastwalzen sind als Tastwalzenpaar 1,1' mit einer Feder 5 gespannt. Zwischen dem Tastwalzenpaar 1, 1' wird ein Faserband FB transportiert. Entsprechend der Dicke des Faserbandes schwenkt die Tastwalze 1' aus. Die Tastwalze 1' ist mit dem Target 4 einer elektrischen Signalbildung 6 verbunden. Entsprechend der Dickenschwankung des Faserbandes schwankt das Target 4 in seiner Enffernung zum feststehenden Näherungssensor 3. Im Näherungssensor 3 wird in Abhängigkeit der Annäherung des Targets 4 ein elektrisches Meßsignal 7 gebildet. Hat das Tastwalzenpaar die idealisierte Geometrie und Zentrizität wie in Figur 2 dargestellt, dann würden keine Meßfehler durch Unrundheit oder Exzentrizität auftreten.
Figur 2a zeigt mögliche Unrundheiten U1 (entspricht einer Senke) und U2 (entspricht einer Erhöhung) an der Tastwalze 1. Unrundheiten können unterschiedlichste Gestalt annehmen. Unrundheit kann an der Tastwalze 1 oder an der Tastwalze 1' oder an beiden Auftreten.
Figur 2b zeigt eine typische Exzentrizität E, wie sie auftritt infolge einer Abweichung (Fig. 2b) aus der zentrischen Lagerung (Figur 2) einer Tastwalze, hier der Tastwalze 1'. Bezugszeichen "E" nach Figur 2b ist ein Maß für die mögliche Abweichung aus der vorhandenen zentrischen Lagerung nach Figur 2. Diese Fehler der Exzentrizität oder ihre Kombinationen mit Unrundheit führen zu einer Verfälschung des erzeugten elektrischen Meßsignals 7.

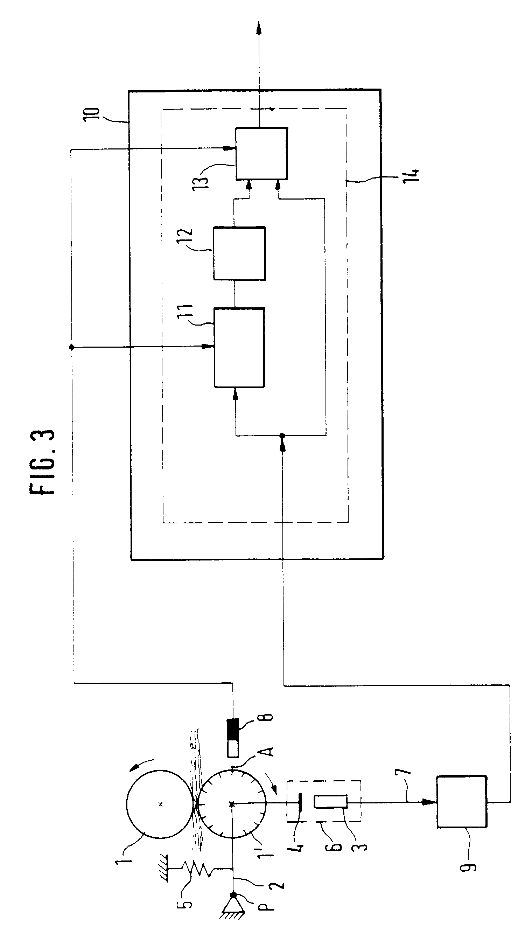

Vorrichtungsgemäß nach Figur 3 ist die Tastwalze 1' mit einem Drehwinkelgeber 8 ausgerüstet. Eine Umdrehung beispielsweise im Bezug auf Position A liefert eine definierte Anzahl von Positionsimpulsen der Tastwalze 1'. Da Tastwalze 1 und 1' synchron miteinander laufen (Riemen oder Getriebekopplung), gilt die Aussage für das Tastwalzenpaar. Eine Umdrehung entspricht einem Intervall. In Zuordnung zu den gewonnenen Positionssignalen werden über den Näherungssensor 3 Meßsignale abgetastet. Die Abtastung der Meßsignale erfolgt also synchron zu den definierte Positionsstellungen des Tastwalzenpaares. Die in der elektrischen Signalbildung 6 gewonnenen Meßsignale werden durch einen Analog-Digital-Wandler 9 digitalisiert.

Für jede Umdrehung der Tastwalze wird eine konstante Anzahl von Meßsignalen gewonnen. Das sind die Meßsignale für ein Intervall. Aus einer Vielzahl von Umdrehungszyklen ermittelt eine Elektronik 10 einen gemittelten Wertesatz der Meßsignale für ein Intervall.

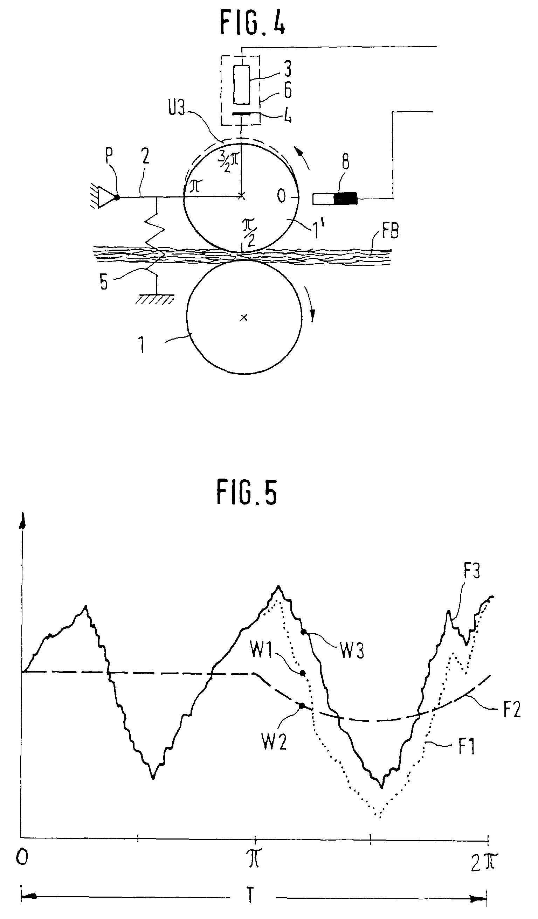

Die Elektronik 10 ist mit Baugruppen zur Mittelwertbildung ausgerüstet. Kern der Elektronik 10 ist ein Mikroprozessor 14. Der über viele Umdrehungszyklen gemittelte Wertesatz der Meßsignale gibt ein Abbild des Fehlerwertes, der durch die Unrundheit und/oder Exzentrizität der Tastwalzen verursacht wird. Figur 4 zeigt beispielsweise eine Unrundheit U3, die bezogen auf eine Umdrehung des Tastwalzenpaares 1, 1' als Senke im Drehwinkelbereich π bis 2π wirkt. Bei der Unrundheit und/oder Exzentrizität handelt es sich um einen Fehler, der periodisch das Meßsignal beeinflußt. Die Meßsignale zur Faserbanddicke sind um ihren Mittelwert symmetrisch verteilt, d.h. sie entsprechen einer statistischen Normalverteilung. Diesen Sachverhalt mit Bezug auf Figur 4 dokumentiert Figur 5. Das Tastwalzenpaar 1, 1' dreht in der angegebenen Richtung (Pfeil). Die Dicke eines Faserbandes FB ist als Funktion F1 über ein Intervall T (0 bis 2π) dargestellt. Mit Hilfe eines gemittelten Wertesatzes für ein Intervall werden periodische Fehler wie Unrundheit und/oder Exzentrizität ermittelbar. In Figur 5 zeigt die Funktion F2 einen nach vielen Umdrehungszyklen gemittelten Wertesatz der Meßsignale. Das entspricht einem Signalmittelwert. Die Funktion F2 widerspiegelt im Abschnitt π bis 2π des Intervalls T die entsprechenden Fehlerwerte wie sie sich infolge der Anordnung von Figur 4 ergeben. Dieser gemittelte Wertesatz der Meßsignale für ein Intervall wird in einem Speicher abgespeichert. Er stellt ein "Urbild" für eine Umdrehung des Tastwalzenpaares 1, 1' dar. Die Ermittlung eines solchen "Urbildes" ist eine wichtige Voraussetzung. Dieses sogenannte Urbild muß als Unikat zu einem gewählten Zeitpunkt ermittelt werden und für die nachfolgende Arbeit des Verfahrens zugrunde gelegt werden. Die Funktion F2 zeigt gemäß Figur 5 positionsbezogene Fehlerwerte unterschiedlicher Größe im Drehwinkelbereich π bis 2π.

Mit Betrieb des Tastwalzenpaares 1, 1' werden aktuelle, positionssynchrone Meßsignale von der elektrischen Signalbildung 6 geliefert. Der Drehwinkelgeber 8 steuert mit seinen digitalen Impulsen über die Elektronik 10, daß Meßsignale 7 zu synchronen Winkelpositionen abgetastet und ermittelt werden. Diese Meßsignale 7 werden mittels A/D-Wandler 9 digitalisiert.

Wie bereits erläutert, wird aus einer Vielzahl von Umdrehungszyklen ein gemittelter Wertesatz für ein Intervall T ermittelt. Dieser Vorgang erfolgt mit einem Mittelwertbildner 11, der die entsprechenden Fehlerwerte nach ihrer Phasenlage als Abweichungen vom Signalmittelwert ermittelt. Diese Fehlerwerte werden im Speicher 12 positionsbezogen gespeichert.

Jene aktuellen Meßsignale, die positionssynchron einem gespeicherten Fehlerwert zugeordnet werden können, werden in einem Korrekturglied 13 um den Fehlerwert korrigiert. Das diese Korrektur möglich wird und der Fehlerwert positionsbezogen aus einem Speicher 12 verfügbar wird, wird durch der Drehwinkelgeber 8 gesteuert. Die Korrektur erfolgt im Beispiel nach Figur 5 durch Addition des Fehlerwertes zu dem entsprechenden positionssynchronen, aktuellen Meßsignal 7. Das Ergebnis einer Korrektur zeigt gemäß Figur 5 die Funktion F3. Beispielsweise wird der positionsbezogene Fehlerwert W2 zu dem aktuellen, positionssynchronen Meßsignal W1 addiert und ergibt das korrigierte Meßsignal W3.

Beispielsweise bei einer Unrundheit U2 müßte der ermittelte Fehlerwert subtrahiert werden.

Der durch Unrundheit und/oder Exzentrizität bestehende Fehler wird somit vor einer Weiterverarbeitung korrigiert. Die Genauigkeit der Korrektur ist abhängig von der Art der Positionsbestimmung und von der Anzahl der Umdrehungszyklen zur Ermittlung eines gemittelten Wertesatzes.

Um das Verfahren unabhängig zu machen von langfristigen Dickenänderungen (langfristige Nummernschwankungen), d.h. um die periodischen Fehlerwerte deutlicher herauszustellen, sollte der langfristige Anteil der Schwingung zur Faserbanddicke eliminiert werden. Es handelt sich um den sogenannten DC-Anteil bzw. Gleichstromanteil einer Schwingung zur Faserbanddicke. Dieser DC-Anteil wäre positionsbezogen vom gemittelten Wertesatz der Meßsignale zu subtrahieren.

Um das Verfahren weiter zu automatisieren, kann es selbstlernend ausgeführt werden. Dazu wäre es notwendig, die Mittelung von Meßsignalen aus mehreren Umdrehungszyklen durch einen mitlaufenden Mittelwertfilter zu realisieren. Es könnte so erreicht werden, daß mit jeder Umdrehung das korrigierte Ausgangssignal genauer wird.

Weiterhin ist es ebenfalls möglich, eine langsame, mechanische Abnutzung der Tastwalzen zu erfassen und während des Betriebes zu korrigieren. Dies ist möglich indem zu definierten Zeitabstände ein neues "Urbild" des gemittelten Wertesatzes erzeugt wird und mit dem vorhergehenden Urbild verglichen wird. Veränderungen würden einer mechanischen Abnutzung entsprechen.

Das beschriebene Verfahren hat weiterhin den Vorteil, daß es wenig Zwischenstufen hat und folglich eine hohe Verarbeitungsgeschwindigkeit hat und zugleich kostengünstig zu realisieren ist.

Zur Ermittlung des Fehlerwertes wäre grundsätzlich auch ein Korrelationsverfahren möglich. Unter Nutzung einer Autokorrelation könnte das Meßsignal 7 ausgewertet werden, d.h. daß beispielsweise die Periodizität einer Unrundheit für ein Intervall T ermittelt wird. Dazu wird ein elektronischer Korrelator verwendet, der entsprechend der Definition zur Autokorrelation eine Zeitverschiebung der ermittelten Kurve zur Faserbanddicke erzeugt, um aus nunmehr beiden Kurven der Faserbanddicke einen quadratischen Mittelwert der Meßsignale zu ermitteln. Die ermittelten Periodizitäten entsprechen Fehlerwerten. Diese Fehlerwerte müssen ebenfalls zur positionssynchronen Korrektur der aktuellen Meßsignale verwendet werden.

## Patentansprüche

1. Verfahren zur Korrektur eines von einem Tastwalzenpaar (1, 1') zur Dicke eines textilen Faserbandes (FB) gewonnenen Meßsignals,
wobei eine der beiden Tastwalzen (1') schwenkbar gelagert wird und die schwenkbare Tastwalze (1') mittels eines Kraftmittels (5) gegen die stationäre Tastwalze gepreßt wird und
bei Unrundheit mindestens einer Tastwalze (1, 1') und/oder bei Abweichung aus einer zentrischen Lagerung der Tastwalze (1, 1') ein periodischer Fehlerwert im Meßsignal erzeugt wird und
die von der Dicke des Faserbandes (FB) verursachte Schwenkbewegung der Tastwalze (1') von einer elektrischen Signalbildung (6) in ein elektrisches Meßsignal gewandelt wird und
eine Signalverarbeitung auf das elektrische Meßsignal reagiert,
um einen Verzug des Faserbandes (FB) oder eine Qualitätsüberwachung des Faserbandes (FB) zu beeinflussen,
dadurch gekennzeichnet, daß
bereits vor der Signalverarbeitung das elektrische Meßsignal von einer Elektronik (10) erfaßt und mittels eines Mittelwertbildners (11) der Elektronik (10) der im elektrischen Meßsignal enthaltene periodische Fehlerwert (W2) ermittelt wird und der periodische Fehlerwert (W2) positionsbezogen bezüglich einer Umdrehung der Tastwalzen (1, 1') in einen Speicher (12) der Elektronik (10) gespeichert wird und
der gespeicherte Fehlerwert (W2) bei Betrieb der Tastwalzen (1, 1') innerhalb von Umdrehungszyklen in einem Korrekturglied (13) der Elektronik (10) zur Korrektur des aktuellen, positionssynchronen Meßsignals (W1) verwendet wird, so daß das von der Elektronik (10) gelieferte elektrische Meßsignal (W3) frei von dem durch Unrundheit und/oder Abweichung aus der zentrischen Lagerung verursachten periodischen Fehlerwert (W2) ist.

2. Verfahren nach Anspruch 1, dadurch gekennzeichnet, daß ein periodischer Fehlerwert (W2) im Meßsignal durch die Elektronik (10) ermittelt wird, indem zu auswählbaren Drehpositionen des Tastwalzenpaares (1,1') eine konstante Anzahl von positionsbezogenen Meßsignalen (F1) für eine Umdrehung gebildet werden und mittels vieler Umdrehungszyklen für ein Intervall (0 bis 2π, T) ein gemittelter Wertesatz (F2) aus den Meßsignalen gebildet wird und Abweichungen im Intervall von einem Signalmittelwert im Intervall des gemittelten Wertesatzes (F2) als Fehlerwerte (W2) ermittelt werden.

3. Verfahren nach Anspruch 2, dadurch gekennzeichnet, daß die verwendeten elektrischen Meßsignale (W1) digitalisiert werden.

4. Verfahren nach Anspruch 1, dadurch gekennzeichnet, daß in Abhängigkeit seiner Phasenlage der positionsbezogene, gespeicherte Fehlerwert (W2) zu dem aktuellen positionssynchronen Meßsignal (W1) addiert oder subtrahiert wird, so daß eine Korrektur (W3) des Meßsignals erreicht ist.

5. Vorrichtung zur Korrektur eines von einem Tastwalzenpaar (1, 1') zur Dicke eines textilen Faserbandes (FB) gewonnenen Meßsignals,
wobei eine der beiden Tastwalzen (1') schwenkbar gelagert ist und ein Kraftmittel (5) die schwenkbare Tastwalze (1') gegen die stationäre Tastwalze (1) preßt und die schwenkbare Tastwalze (1')
mit einer elektrischen Signalbildung (6) angeordnet ist, die die von der Dicke des Faserbandes (FB) verursachte Schwenkbewegung der Tastwalze (1') als ein elektrisches Meßsignal erfaßt und eine Signalverarbeitung vorhanden ist, die auf das elektrische Meßsignal reagiert, dadurch gekennzeichnet, daß die Vorrichtung
zur Durchführung des Verfahrens nach einem oder mehreren der Ansprüche 1 bis 4 ausgebildet ist und
die elektrische Signalbildung (6) das elektrische Meßsignal an einen A/D-Wandler (9) liefert, der mit einer Elektronik (10) verbunden ist und
ein mit einer Tastwalze (1') gekoppelter Drehwinkelgeber (8) mit der Elektronik (10) verbunden ist und der Ausgang der Elektronik (10) mit der Signalverarbeitung verbunden ist.

6. Vorrichtung nach Anspruch 5, dadurch gekennzeichnet, daß der Drehwinkelgeber (8) über die Elektronik (10) die Abtastrate der Signalbildung (6) steuert.

7. Vorrichtung nach einem oder beiden der Ansprüche 5 und 6, dadurch gekennzeichnet, daß der Drehwinkelgeber (8) die Korrektur eines aktuellen, positionssynchronen Meßsignals (W1) mit dem entsprechenden Fehlerwert (W2) im Korrekturglied (13) steuert.

8. Vorrichtung nach einem oder mehreren der Ansprüche 5 bis 7, dadurch gekennzeichnet, daß die Elektronik (10) einen Mikroprozessor (14) hat, der einen Mittelwertbildner (11), einen Speicher (12) und ein Korrekturglied (13) umfaßt.

## Claims

1. A method of correcting a measurement signal received from a pair of sensing rollers (1, 1') with respect to the thickness of a textile sliver (**FB**),
one of the two sensing rollers (1') being pivotably mounted and the pivotable sensing roller (1') being pressed against the stationary sensing roller by means of a power means (5),
in the event of non-circularity of at least one sensing roller (1, 1') and/or in the event of deviation from a central position of the sensing roller (1, 1') a periodic error value is produced in the measurement signal, and
the pivoting movement of the sensing roller (1') caused by the thickness of the sliver (**FB**) is converted into an electrical measurement signal by an electrical signal-forming means (6), and
a signal-processing means reacts upon the electrical measurement signal
in order to influence a delay of the sliver (**FB**) or a quality control of the sliver (**FB**),
**characterized in that**
before the signal processing the electrical measurement signal is detected by an electronic unit (10), and the periodic error value (**W2**) contained in the electrical measurement signal is determined by means of a signal averager (11) of the electronic unit (10), and the periodic error value (**W2**) is stored in a store (12) of the electronic unit (10) in terms of its position with respect to one revolution of the sensing rollers (1, 1'), and
during the operation of the sensing rollers (1, 1') within rotational cycles the stored error value (**W2**) is used in a correction member (13) of the electronic unit (10) for correcting the current position-synchronous measurement signal (**W1**),
so that the electrical measurement signal (W3) delivered by the electronic unit (10) is free from the periodic error value (**W2**) caused by non-circularity and/or deviation from the central position.

2. A method according to Claim 1, **characterized in that** a periodic error value (**W2**) in the measurement signal is determined by the electronic unit (10), in that for selectable rotational positions of the pair of sensing rollers (1, 1') a constant number of position-specific measurement signals (**F1**) for one revolution are formed and an averaged set of values (**F2**) is formed from the measurement signals for a range (0 to 2π, **T**) by means of a plurality of rotational cycles and deviations in the range from a signal average in the range of the averaged set of values (**F2**) are determined as error values (**W2**).

3. A method according to Claim 2, **characterized in that** the measurement signals (**W1**) used are digitalized.

4. A method according to Claim 1, **characterized in that** as a function of its phase position the position-specific stored error value (**W2**) is added to or substracted from the current position-synchronous measurement signal (**W1**), so as to achieve a correction (**W3**) of the measurement signal.

5. A device for correcting a measurement signal received from a pair of sensing rollers (1, 1') with respect to the thickness of a textile sliver (**FB**),
one of the two sensing rollers (1') being pivotably mounted and a power means (5) pressing the pivotable sensing roller (1') against the stationary sensing roller (1), and the pivotable sensing roller (1')
is arranged with an electrical signal-forming means (6) which detects the pivoting movement of the sensing roller (1') caused by the thickness of the sliver (**FB**) as an electrical measurement signal, and a signal-processing means is present which reacts upon the electrical measurement signal, **characterized in that** the device is designed in order to perform the method according to one or more of Claims 1 to 4, and
the electrical signal-forming means (6) delivers the electrical measurement signal to an A-D converter (9) which is connected to an electronic unit (10), and
a rotational-angle pick-up (8) coupled to a sensing roller (1') is connected to the electronic unit (10) and the output of the electronic unit (10) is connected to the signal-processing means.

6. A device according to Claim 5, **characterized in that** the rotational-angle pick-up (8) controls the sensing rate of the signal-forming means (6) by way of the electronic unit (10).

7. A device according to one or both of Claims 5 and 6, **characterized in that** the rotational-angle pick-up (8) controls the correction of a current position-synchronous measurement signal (**W1**) with the corresponding error value (**W2**) in the correction member (13).

8. A device according to one or more of Claims 5 to 7, **characterized in that** the electronic unit (10) has a microprocessor (14) which comprises a signal averager (11), a store (12) and a correction member (13).

## Revendications

1. Procédé pour corriger un signal de mesure d'épaisseur d'un ruban de fibres textile (FB) obtenu par une paire de rouleaux palpeurs (1, 1'),
un des rouleaux palpeurs (1') étant logé de façon pivotante et le rouleau palpeur pivotant (1') étant pressé contre le rouleau palpeur stationnaire à l'aide d'un moyen de force mécanique (5) et
qu'en cas d'un faux-rond d'au moins un rouleau palpeur (1, 1') et/ou en cas d'écart d'un logement centrique du rouleau palpeur (1, 1') une valeur d'erreur périodique étant produite dans le signal de mesure et
le mouvement pivotant du rouleau palpeur (1') provoqué par l'épaisseur du ruban de fibres (FB) étant converti en un signal de mesure électrique par un dispositif pour la formation de signaux électriques (6) et
un dispositif de transformation de signaux réagissant au signal de mesure électrique dans le but d'influencer un étirage du ruban de fibres (FB) ou un contrôle de qualité du ruban de fibres (FB),
caractérisé en ce que déjà avant la transformation du signal, le signal de mesure électrique est saisi par une installation électronique (10) et que la valeur d'erreur périodique (W2) contenue dans le signal de mesure électrique est déterminée moyennant un dispositif pour l'établissement de la valeur moyenne (11) de l'installation électronique (10) et que la valeur d'erreur périodique (W") est mémorisée dans une mémoire (12) de l'installation électronique (10), compte tenu de la position en ce qui concerne une rotation des rouleaux palpeurs (1, 1') et
que la valeur d'erreur (W") mise en mémoire est utilisée, lorsque les rouleaux palpeurs (1, 1') marchent dans des cycles de rotation, dans un membre de correction (13) de l'installation électronique (10) pour corriger le signal de mesure (W1) actuel et synchrone, en ce qui concerne la position, si bien que le signal de mesure électrique (W3) fourni par l'installation électronique (10) est exempt de la valeur d'erreur périodique (W2) causée par le faux-rond et/ou l'écart de la position centrique.

2. Procédé selon la revendication 1, caractérisé en ce qu'une valeur d'erreur périodique (W2) est déterminée par l'installation électronique (10) dans le signal de mesure, par le fait qu'un nombre constant de signaux de mesure (F1) relatifs à des positions déterminées à choisir de la paire des rouleaux palpeurs (1, 1') est établi pour une rotation et que, à l'aide d'une pluralité de cycles de rotation pour un intervalle (0 à 2π, T), une valeur (F2) moyenne est établie des signaux de mesure et que des écarts dans l'intervalle, d'une valeur de signaux moyenne dans l'intervalle de la valeur (F2) moyenne, sont déterminés comme valeurs d'erreurs (W2).

3. Procédé selon la revendication 2, caractérisé en ce que les signaux de mesure électriques (W1) utilisés sont numérisés.

4. Procédé selon la revendication 1, caractérisé en ce qu'en fonction de la relation de ses phases, la valeur d'erreur (W2) mémorisée et qui se réfère à une position déterminée est ajoutée au respectivement déduite du signal de mesure (W1) actuel et synchrone en ce qui concerne la position, si bien qu'une correction (W3) du signal de mesure est obtenue.

5. Dispositif pour corriger un signal de mesure d'épaisseur d'un ruban de fibres textile (FB) obtenu par une paire de rouleaux palpeurs (1, 1'),
un des rouleaux palpeurs (1') étant logé de façon pivotante et un moyen de force mécanique (5) pressant le rouleau palpeur pivotant (1') contre le rouleau palpeur stationnaire, et le rouleau palpeur (1') pivotant
étant pourvu d'un dispositif (6) émetteur de signaux électriques susceptible de saisir le mouvement pivotant du rouleau palpeur (1'), provoqué par l'épaisseur du ruban de fibres (FB), comme signal de mesure électrique, et une installation de transformation de signaux étant prévue réagissant au signal de mesure électrique, caractérisé en ce que le dispositif est conçu pour la mise en oeuvre du procédé selon l'une ou plusieurs des revendications 1 à 4 et que le dispositif (6) émetteur du signal électrique transmet le signal de mesure électrique à un convertisseur analogique/numérique (9) lequel est en connexion avec une installation électronique (10) et
qu'un détecteur indiquant l'angle de rotation (8) affecté à un rouleau palpeur (1') est en liaison avec l'installation électronique (10) et que la sortie de l'installation électronique (10) est en liaison avec l'intallation de traitement de signaux.

6. Dispositif selon la revendication 5, caractérisé en ce que le détecteur indiquant l'angle de rotation (8) commande la fréquence de palpage du dispositif (6) émetteur de signaux, par l'intermédiaire de l'installation électronique (10).

7. Dispositif selon l'une des revendications 5 et 6, ou selon les deux, caractérisé en ce que le détecteur indiquant l'angle de rotation commande la correction d'un signal de mesure actuel et synchrone en ce qui concerne la position (W1), à l'aide de la valeur d'erreur correspondante (W2) contenue dans le membre de correction (13).

8. Dispositif selon l'une ou plusieurs des revendications 5 à 7, caractérisé en ce que l'installation électronique (10) comporte un microprocesseur (14) qui comprend un dispositif pour établir la valeur moyenne (11), une mémoire (12) et un membre de correction (13).
